Europäisches Patentamt

European Patent Office

Office européen des brevets

(19)

(11) Publication number: **0 162 929 B1**

# EUROPEAN PATENT SPECIFICATION

(12)

(45) Date of publication of patent specification: **25.09.91**   (51) Int. Cl.⁵: **G06F 9/38**

(21) Application number: **84904163.7**

(22) Date of filing: **08.11.84**

(86) International application number:
**PCT/JP84/00536**

(87) International publication number:
**WO 85/02280 (23.05.85 85/12)**

(54) **METHOD OF CONTROLLING BRANCHING.**

(30) Priority: **16.11.83 JP 215196/83**

(43) Date of publication of application:
**04.12.85 Bulletin 85/49**

(45) Publication of the grant of the patent:
**25.09.91 Bulletin 91/39**

(84) Designated Contracting States:
**DE FR GB**

(56) References cited:
**JP-A- 0 057 755**
**JP-A- 5 585 956**

**No relevant documents have been disclosed.**

(73) Proprietor: **FUJITSU LIMITED**
**1015, Kamikodanaka Nakahara-ku**
**Kawasaki-shi Kanagawa 211(JP)**

(72) Inventor: **ONISHI, Katsumi**
**2-137, Shimoshingashi**
**Kawagoe-shi Saitama 356(JP)**
Inventor: **ONO, Yuto**
**Fujitsukounryo, 532-4, Miyauchi**
**Nakahara-ku, Kawasaki-shi Kanagawa**
**211(JP)**

(74) Representative: **Muir, Ian R. et al**
**HASELTINE LAKE & CO. Hazlitt House 28**
**Southampton Buildings Chancery Lane**
**London WC2A 1AT(GB)**

## Description

### TECHNICAL FIELD

The present invention relates to a branching control system, particularly a branching control system in a data processing unit of the pipeline control type.

### BACKGROUND ART

In recent large-scale computer systems, pipeline systems are generally used for processing data quickly.

High-speed processing utilising pipeline characteristics can be adapted for processing ordinary instructions flowing sequentially. However, with regard to branching instructions, successive instructions already fetched to the pipeline are invalidated when the branching conditions are determined, generating loss-cycles. Particularly for data processing of the kind involved in constituting data base processing or online data processing, which are data processing techniques recently in general employment, the ratio of branching instructions occurring in programs for such data processing is large and the number of loss-cycles generated in a pipeline system is significant. Therefore, a pipeline processing system which can reduce the occurrence of such loss-cycles is much desired.

Operations of a prior art system in cases in which an index high branching (hereinafter referred to as BXH) instruction or an index low equal branching (hereinafter referred to as BXLE) instruction (which instructions are also employed in embodiments of the present invention) are executed in a data processing system which executes instructions in a pipeline, are explained below.

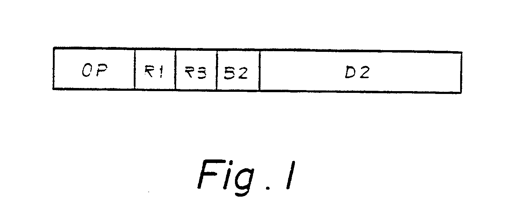

Said BXH instruction and said BXLE instruction are of the register storage (RS) type as shown in Fig. 1, wherein OP is the operation code area and R1, R3, B3 are register designation areas. The content of a general purpose register indicated by R1 becomes the first operand, the content of a general purpose register indicated by R3 becomes the third operand and a value obtained by adding a value of D2 to the content of a general purpose register indicated by B2 becomes the second operand.

The BXH instruction branches to the address indicated by the second operand in a case in which said third operand is added as an increment to said first operand (hereinafter referred to as an index) and the result is larger than a comparison number determined by the R3 area. Whether branching is or is not conducted, the content of the first operand is updated to the value obtained by adding the increment thereto. The increment is the content (third operand) of the general purpose register designated by the R3 area as mentioned above. The comparison number is in a general purpose register having an odd number. When the R3 area indicates an even numbered register, the comparison number is the content of general purpose register indicated by R3 + 1. When the R3 area indicates an odd numbered register, the comparison number is the content of the general purpose register indicated by R3 itself.

It is also possible that the general purpose register has the same comparison number as the first operand and in this case an initial value before adding the increment is used as the comparison number.

The BXLE instruction is the same as said BXH instruction, except that the conditions for branching are inverted, so that branching is carried out when the index is smaller than or equal to the comparison number, for example.

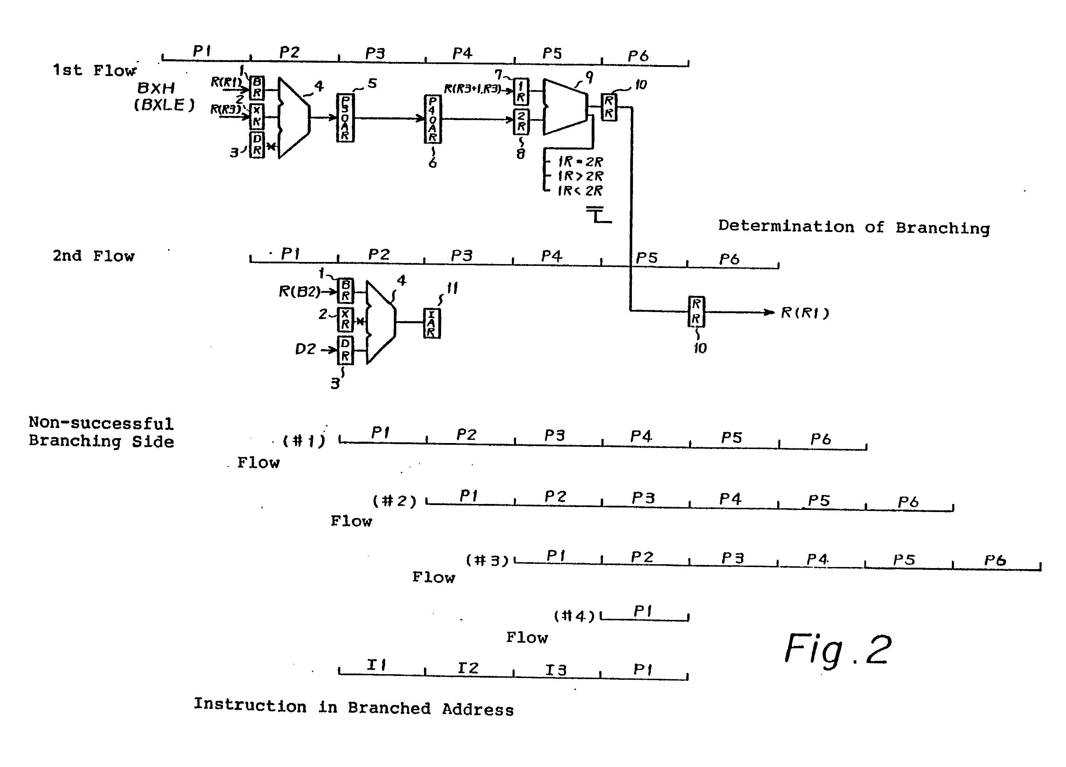

Pipeline operations by a prior art system, for executing said BXH and BXLE instructions, are explained by referring to Fig. 2. In this Figure, P1, P2, P3, P4, P5, P6 are stages of a pipeline and general operations are as follows. Namely,

| | |
|---|---|
| Stage P1: | decoding of instructions and data reading from general purpose registers |
| Stage P2: | calculation of operand address and generation of buffer memory access request |
| Stage P3: | conversion of logical address to real address by address conversion buffer |
| Stage P4: | buffer memory access |
| Stage P5: | arithmetic operation |
| Stage P6: | writing of operation result to general purpose registers. |

Execution of instructions by pipeline is generally carried out in such a manner that one instruction is developed into one or a plurality of flows.

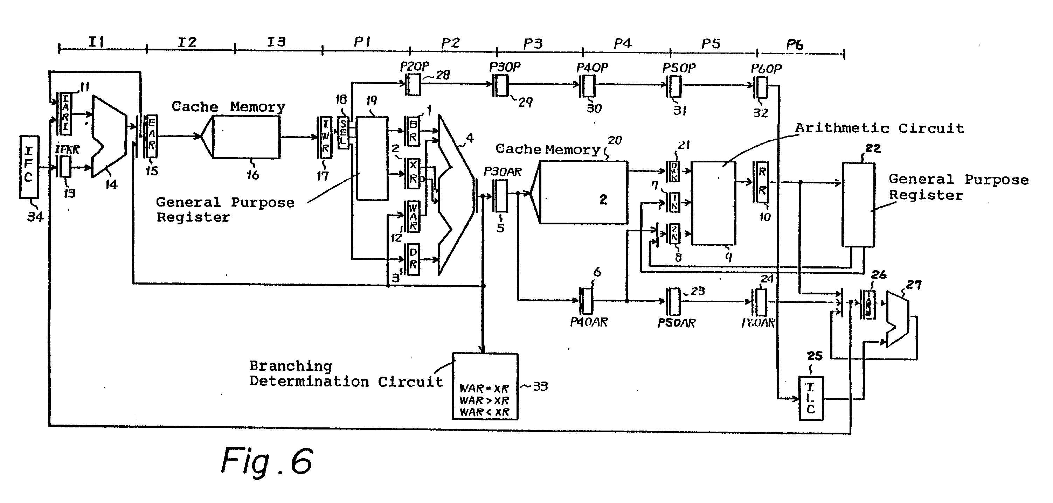

Constitution of the prior art system for carrying out processings as shown in Fig. 2 differs in detail from the constitution of an embodiment of the present invention as described below with reference to Fig. 6, but it may be useful to refer to Fig. 6 at this point for an outline understanding of main parts of the system.

The pertinent constitution will be roughly explained. Stages P1 to P6 are provided as mentioned above and the stages I1, I2, I3 shown in Fig. 6 are stages for an instruction fetch pipeline, operations in each stage of the instruction fetch pipeline being as follows:-

| | |
|---|---|
| Stage I1: | sending a generated branching address to an address conversion buffer |

Stage I2: converting a logical address to a real address by the address conversion buffer

Stage I3: making access to a buffer memory using said real address

Stage P1: reading instructions from the buffer memory, instruction decoding and operand reading from registers.

The address conversion buffer may be considered to be provided as a part of the cache memory 16 or 20, or in a stage preceding such a memory, but here it is not shown.

An address of an instruction to be executed is set in an instruction address register (hereinafter referred to as IAR), and the pertinent instruction word is read through an effective address register (hereinafter referred to as EAR) 15 and cache memory 16 and is set in an instruction word register (hereinafter referred to as IWR) 17. Said IWR 17 generally has a shift register constitution with a plurality of stages and a plurality of instructions to be processed by the pipeline are sequentially prefetched and then stored therein.

The prefetched instructions are extracted through a selector 18 and sent to the pipeline indicated by stages P1 to P6. Namely, the operation code area (OP area) in the instruction word is shifted as register 28, 29, ..... 32 sequentially with advancement of stages. The address of an operand corresponding to the pertinent instruction is calculated through an adder 4, the corresponding operand is read by the cache memory 20 and it is then supplied to a calculation circuit 9. The calculation result is set in one of the general purpose registers 22 through a register 10.

During this period, when an instruction sent to the pipeline is a branching instruction, it is determined whether the branching has been successfully conducted or not.

The items indicated by reference signs 1, 2, 3, 4, 5, 6, 7, 8, 9, 10, 11, shown in Fig. 2, can be thought as corresponding to the items indicated by the same reference numerals in Fig. 6.

In the prior art, if it is required to execute a branching instruction using functions at each stage as described above in relation to Fig. 2, the content of the general purpose register indicated by R1 of said instruction is set in a base register (hereinafter referred to as BR) 1 whilst the content of the general purpose register indicated by R3 is set in an index register (hereinafter referred to as XR) 2 in stage P2 of the first flow of said branching instruction. An addition of the first operand (in BR 1) and an increment (in XR 2) is carried out using a 3-input adder 4 (an address generating circuit is constituted by BR 1, XR 2, DR 3 described later, and 3-input adder 4). The result is sent to the pipeline and it is set in an operand register #2 (hereinafter referred to as 2R) 8 in the stage P5 through the P3 cycle operand address register (hereinafter referred to as P30AR) 5 in the stage P3 and the P4 cycle operand address register (hereinafter referred to as P40AR) 6 in stage P4. Simultaneously, a comparison number, from the general purpose register indicated by R3 + 1 or R3, is set in the operand register #1 (hereinafter referred to as 1R), and calculation for comparison is carried out in the adder 9 of an operation part (the operation part is composed of such registers 1R 7, 2R 8 and adder 9). Thereby, a signal indicating the relationship between the values 1R and 2R (namely, a signal indicating $1R = 2R$, $1R > 2R$, $1R < 2R$) is output and simultaneously a value of 2R is set in a result register (RR) 10. Branching operation is determined by the signal which indicates the relationship between said 1R and 2R.

In the system of prior art, the calculation for comparison is carried out in the stage P5.

Next, in the stage P2 of the second flow, a value from the general purpose register indicated by B2 of the branching instruction is set in BR 1, the value of D2 is set in a displacement register (hereinafter referred to as DR) 3, and the branching address is generated by the 3-input adder 4 used for the first flow, and it is then set in an instruction address register (hereinafter referred to as IAR) 11 in the stage P3 and simultaneously a branching address instruction read request is issued when the address is generated in the stage P2. Thereby, the instruction extraction pipeline (instruction fetch pipeline) [I1, I2, I3] is started and in this case the branching address instruction can be extracted.

Said instruction fetch pipeline allows processing to sequentially advance through stages I1, I2 and I3 and the branching instruction to be extracted at the stage P1. When branching is carried out successfuLly, the processing thus enters the ordinary instruction pipeline.

Writing of a value obtained when the increment is added to the index value (the first operand) of the general purpose register R1 is carried out for the general purpose registers indicated by RR10 to R1 at the end timing of stage P6 of the second flow.

As is apparent from Fig. 2 (Non-successful Branching Side), in the prior art system, instruction prefetch is carried out for the instructions which would be executed if branching is not carried out successfully, following said branching instruction. When the third flow of the Non-successful Branching Side changes from stage P1 to stage P2, the branching address instruction is available and can be fetched to the stage P1. However, the instructions involved in as many as three flows on the Non-successful Branching Side are aborted if successful branching is determined. If the branching is not successful when the branching conditions are determined, the fourth flow is brought into the stage P1, but if the branching is successful, processings of instructions as many as said three flows which are already aborted are cancelled and the branching address instruction is fetched to the stage P1.

As is obvious from the above explanation, when the BXH instruction (or the BXLE instruction) is executed in the prior art system, five cycles are required for successful branching, while two cycles are required for non-successful branching. There is thus a large difference in the number of cycles between them, and processings for three flows must be cancelled in the pipeline when the branching has been conducted successfully.

Such a difference in the number of cycles for successful and non-successful branching makes the formation of successive instructions complicated, namely the generation of programs, and cancellation of many flows also makes complicated the required processings for cancellation (for example, requests for cancellation to the buffer memory and main memory, etc.). Both disadvantages mentioned above result in large problems for practical use.

Considering such disadvantages of the prior art as described above, it is an object of the present invention to provide a system which quickly determines the branching conditions, reduces invalid flows in a pipeline and executes such BXH and BXLE instructions at high speed in a data processing unit which processes the BXH and BXLE instructions using the pipeline.

In an embodiment of the present invention, the amount of processings to be cancelled upon successful branching is reduced by generating a branching address first, on the occasion of executing a branching instruction.

According to the present invention there is provided a branching control system, in a pipeline data processing unit operable to process instructions by developing them into one or more flows through an instruction pipeline with a plurality of stages operated in successive cycles and including a stage in which an address calculation unit is operated, and having an instruction fetch pipeline with a plurality of stages operated in successive cycles to fetch an instruction at an address supplied thereto,

the control system being operable in response to a branching instruction to cause branching to a branching address when a branching condition is satisfied,

and characterised in that:-

in a first flow of the branching instruction the branching address is calculated by the address calculation unit, and

in a second flow, or second and subsequent flows, satisfaction or non-satisfaction of the branching condition is determined using said address calculation unit,

fetching of an instruction at the branching address being effected by operation of the instruction fetch pipeline initiated upon calculation of the branching address in said first flow and complete upon determination of satisfaction or non-satisfaction of the branching condition or within one cycle thereafter.

In an embodiment of the present invention, a system is provided for executing calculations for determining branching conditions without delay from extraction of branching address instructions by utilising an adder employed for address calculation and has an advantage that the BXH and BXLE instructions are processed at a high speed.

## BRIEF DESCRIPTION OF DRAWINGS

Fig. 1 illustrates a format of a branching instruction related to the present invention,

Fig. 2 illustrates a schematic profile of operations in a case in which said branching instruction is executed by the prior art,

Fig. 3 illustrates a schematic profile of an embodiment of the present invention,

Fig. 4 illustrates a schematic profile of another embodiment of the present invention,

Fig. 5 illustrates an example of the effect obtained by the embodiment shown in Fig. 4,

Fig. 6 illustrates an overall constitution of essential parts of an embodiment of the present invention.

## BEST MODE OF CARRYING OUT THE INVENTION

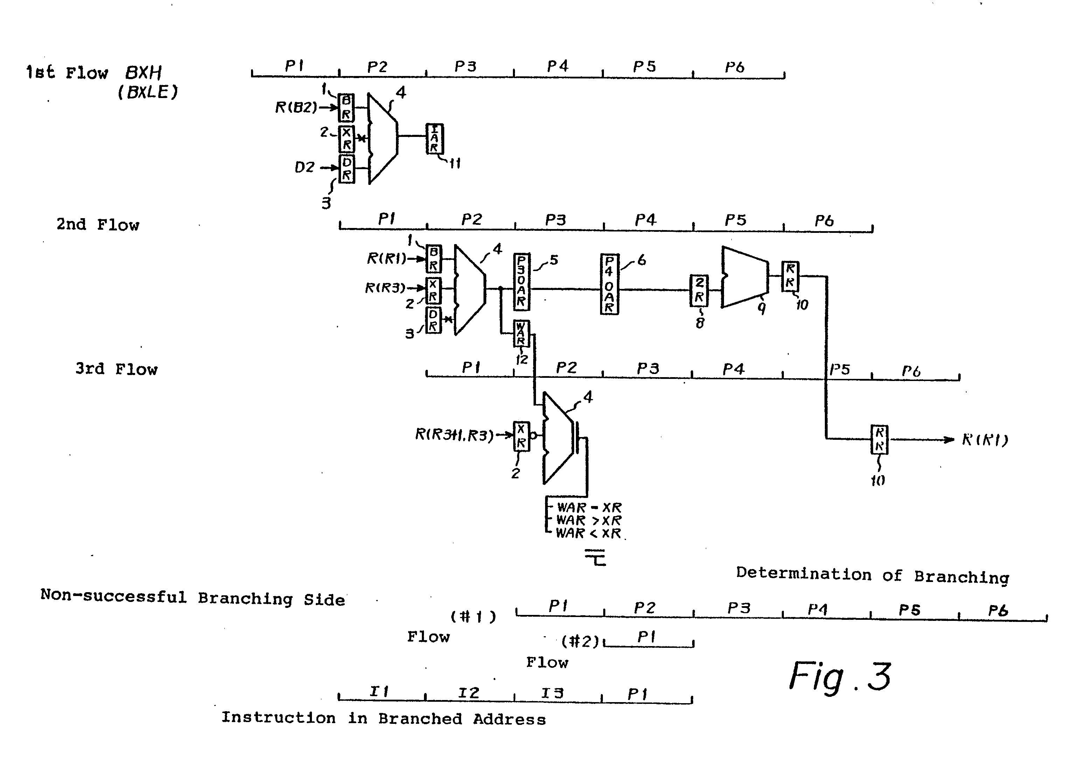

The subject-matter of embodiment shown in Fig. 3 may be summarised by saying that a branching address is first obtained in the stage P2 of the first flow, the address generating circuit is used not only for addition of the index (first operand) and the increment but also for calculation for comparison with the comparison number, and branching processing is determined earlier than in the processing of Fig. 2 which is executed using a calculation part in the stage P5 of the first flow.

In Fig. 3, items 1 to 6 and 8 to 11 correspond to items designated by the same reference signs in Fig. 2 and 12 is a work address register (hereinafter referred to as WAR).

In this Figure, a value from general purpose register B2 is set in BR 1 in the stage P2 of the first flow of said branching instruction, a value of D2 is set to DR 3 (XR 2 is not used), BR 1 and DR 3 are added in the 3-input adder 4, and thereby a branching address is generated and is set in IAR 11 in the stage P3. Simultaneously, the instruction fetch pipeline [I1, I2, I3] is started when the address is generated in the stage P2, to extract the branching address instruction. As a result, the instruction fetch pipeline advances to the stages I2, I3 from the timing of stage P2 (corresponding to the stage I1) of said first flow. Thereby the branching address instruction is fetched at a stage P1 and the ordinary instruction pipeline can be started.

In the stage P2 of the second flow, a value from general purpose register R1 is set in BR 1 and a value from general purpose register R3 is set in XR 2 (DR 3 is not used), said BR 1 and XR 2 are added in the 3-input adder 4 (namely, said address generating circuit), and the result is then set in P30AR 5 and WAR 12 as an added value of the first operand and increment and is sent to the pipeline.

In the pipeline, such value is set in 2R 8 in the stage P5, through P40AR 6 of stage P4 from P30AR 5 of stage P3, and then set to RR 10 at the first timing of stage P6 through the adder 9 of calculation part.

In the stage P2 of the next, third flow, a comparison number, which is a value from general purpose register R3 + 1 or R3, is set in XR 2 and subtraction of XR 2 from WAR 12 set in said second flow is carried out in the 3-input adder 4 (namely, calculation for comparison is carried out), and the relationship between the values of WAR 12 and XR 2 is obtained from the subtraction result in order to determine the branching.

At this time, the instruction fetch pipeline has just fetched the branching address and immediately enters the stage P1 when the branching is carried out successfully.

Writing of a value obtained when the increment is added to the index value (first operand) (being set in RR 10 in the stage P6 of the second flow) to general purpose register R1 is carried out to the general purpose registers RR 10 to R1 at the end timing of stage P6 of the third flow.

In Fig. 3, it should be noted that the branching address is first obtained in the first flow and the address generating circuit is used for said calculation for comparison.

Employment of such a calculation system simplifies control, such as flow cancellation, when the branching is carried out successfully because only one flow of instructions on the Non-successful Branching Side runs before the branching conditions are determined.

When the branching is successful, four processing cycles are necessary but when the branching is not successful, three processing cycles are necessary. Namely, the difference in the number of processing cycles as between successful and non-successful branching is reduced as compared with the prior art system, control is much simplified and overall performance can be improved.

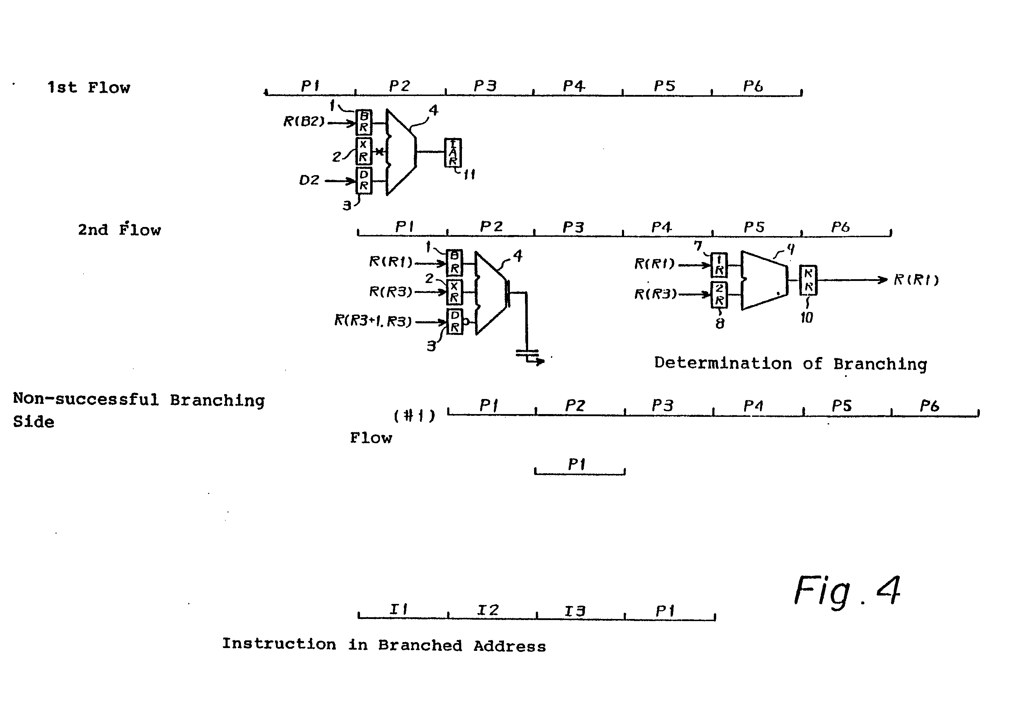

Another embodiment of the present invention is explained below with reference to Fig. 4.

The subject-matter of the embodiment shown in Fig. 4 can be summarised by saying that the branching address is obtained as in the case of Fig. 3, and addition of the index and increment and subtraction of comparison number from the added value are carried out simultaneously utilising the adder of the address generating circuit, a 3-input adder, in order to obtain the relationship between said added value and comparison number, and thereby branching conditions are determined more quickly.

In Fig. 4, items 1 to 4 and 7 to 11 correspond to those designated by the same reference signs in Fig. 2.

In this Figure, a value from general purpose register B2 is set in BR 1, a value of D2 is set in DR 3, BR 1 and DR 3 are added by the 3-input adder 4, the branching address is generated in the stage P2 of the first flow of said branching instruction and such branching address is set in IAR 11 in stage P3. Moreover, the instruction fetch pipeline is started when the branching address is generated in the stage P2. As a result, the instruction fetch pipeline advances to stages I1, I2, I3 from the timing (corresponding to stage I1) of stage P2 of the first flow, and the branching address instruction is fetched in the stage P1 and the ordinary instruction pipeline can be started.

In the stage P2 of the second flow, a value from general purpose register R1 is set in BR 1, a value from general purpose register R3 is set in XR 2 and a comparison number which is a value from general purpose register R3 or R3 + 1 is set in DR 3.

The relationship between the added value of the index (the first operand) and the increment and the comparison number can be obtained in the one calculation cycle of stage P2 by executing the calculation of "BR 1 + XR 2 + (2's complement of DR 3)" in the address generating circuit and the branching condition can be determined immediately.

At this time, the instruction fetch pipeline is at the stage I2 and a waiting condition as long as one cycle is required until it advances to the stage I3 where the branching address instruction is fetched but when the branching instruction is read, it enters immediately the stage P1.

In the stage P5 of the second flow, a value of general purpose register R1 and a value of general purpose register R3 are respectively set to 1R 7, 2R 8, these are added by the adder 9 of the calculation part. The result is set to RR 10 at the initial timing of the stage P6 and it is set in the general purpose registers RR 10 to R1 at the end timing of stage P6. Thereby, writing of value obtained when the increment is added to the index value (first operand) of the general purpose register R1 can be realised.

In the Figure, it should be noted that addition of the index (first operand) and increment and subtraction of comparison number for said result of addition are conducted simultaneously by the 3-input adder in the address generating circuit and thereby the branching determination conditions are obtained.

Employment of such a system simplifies control, such as flow cancellation, when the branching is successful because only one flow of instructions on the Non-successful Branching Side runs before the branching conditions are determined.

In this case, four cycles are necessary when the branching is successful but two cycles are necessary when the branching is not successful.

In case the pipeline is set in the "waiting" condition due to the other circumstances, three cycles are necessary even when the branching is successful if the branching address instruction fetch pipeline is once started and performance can be as much improved.

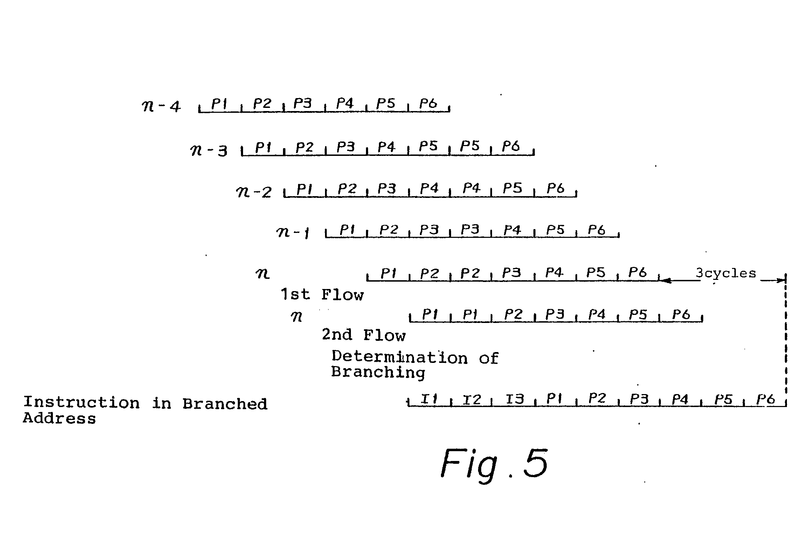

This example is explained by referring to the time chart shown in Fig. 5.

In Fig. 5, n is the pertinent branching instruction and it is developed into two flows for execution as explained with reference to Fig. 4.

If the stage P5 requires two cycles, for example, of the n-3 instruction, a "waiting" condition is generated at the stage P4 in the n-2 instruction and is also generated at the stage P3 in the n-1 instruction, and moreover the "waiting" condition is respectively generated at the stge P2 in the first flow or at the stage P1 in the second flow of the pertinent branching instruction n.

As a result, when the branching is determined in the pertinent branching instruction n (namely, at the stage P2 of the second flow), the instruction fetch pipeline is at the stage I3, it immediately enters the stage P1 when the branching is successful and three processing cycles of said branching instruction are required virtually.

This effect arises due to the fact that the delay of the instruction fetch pipeline, namely the branching address instruction is not yet fetched (namely at the stage I2) when the branching is determined as explained in Fig. 4, has been absorbed by the "waiting" condition generated in said ordinary pipeline.

Fig. 6 shows an entire structure of essential parts of an embodiment of the present invention which performs processing operations explained by referring to Fig. 3 and Fig. 4.

34 at the extreme left side of this Figure is an instruction fetch control part (IFC), which sets "0" in an instruction fetch constant register (IFKR) 13 when a first instruction is read and sets a constant value "8" in IFKR 13 after reading of said first instruction. In the case of the first instruction, the heading address of a program is set in two instruction address registers (IAR (I)) I1 and (IAR (II)) 26, at the extreme right and left ends of the Figure. An adder 14 generates an effective address by adding contents of IAR 11 and IFKR 13 and sets it in an effective address register (EAR) 15. The address conversion buffer (not shown) and cache memory (10) 16 are accessed on the basis of the content of EAR 15 and instructions are sequentially prefetched to the instruction word register (IWR) 17.

One instruction is extracted at the stage P1. At the stage P2, (i) the OP area of the pertinent instruction is set in the register 28 and (ii) the operand address of the pertinent instruction is calculated by the adder 4. Each operand value is ready to be set in the registers 21, 7, 8 through the stages P3 and P4 and such value is calculated by the operation circuit 9 at the stage P5. Calculation result can be obtained at the stage P6.

While the stages change to P3, P4, P5 and P6, the operand address is also shifted to registers 6, 23, 24. When the pertinent instruction is extracted from the pipeline at the stage P6, the content of instruction address register (II) 26 is updated by the adder 27 and instruction length generating circuit (ILC) 25. Namely, the content of instruction address register (II) 26 holds the address of the oldest instruction amongst the instructions being processed in the pertinent pipeline. The branching determination circuit 33 at the lower centre of the Figure carries out "determination of branching" as indicated in Fig. 3 and Fig. 4. The first, second and third flows corresponding to the branching instruction described in Fig. 3 and Fig. 4 mean that the constitution of Fig. 6 is used in such a form as following a plurality of flows on a time sharing basis. Namely, in the explanation corresponding to Fig. 3, for example, the adder 4 shown in Fig. 6 is used for determining content of IAR 11 at the stage P2 of the first flow and for update of index value at the stage P2 of the second flow and moreover used for determination of branching even at the stage P2 of the third flow.

The above explanation of branching refers to the BXH instruction (and similarly to the BXLE instruction) but it is a matter of course that embodiments of the present invention can be adapted to other branching instructions which require three operations such as calculation of branching address, judgement of branching conditions and other calculation.

## Claims

1. A branching control system, in a pipeline data processing unit operable to process instructions by developing them into one or more flows through an instruction pipeline with a plurality of stages (P1 to P6) operated in successive cycles and including a stage (P2) in which an address calculation unit (1, 2, 3, 12, 4) is operated, and having an instruction fetch pipeline with a plurality of stages (I1, I2, I3, P1) operated in successive cycles to fetch an instruction at an address supplied thereto,

   the control system being operable in response to a branching instruction (BXH, BXLE) to cause branching to a branching address when a branching condition is satisfied,

   and characterised in that:-

   in a first flow of the branching instruction (BXH, BXLE) the branching address is calculated by the address calculation unit (1, 2, 3, 12, 4), and

   in a second flow, or second and subsequent flows, satisfaction or non-satisfaction of the branching condition is determined using said address calculation unit (1, 2, 3, 12, 4),

   fetching of an instruction at the branching address being effected by operation of the instruction fetch pipeline (I1, I2, I3, P1) initiated upon calculation of the branching address in said first flow and complete upon determination of satisfaction or non-satisfaction of the branching condition or within one cycle thereafter.

2. A system as claimed in claim 1, wherein satisfaction or non-satisfaction of the branching condition is determined from the result of a comparison in which the sum of an index and an increment, being the contents of respective general purpose registers (R1, R3) in the data processing unit designated by the branching instruction (BXH, BXLE), is compared with a comparison number also held in a general purpose register (R3 + 1, R3) of the data processing unit.

3. A system as claimed in claim 2, wherein the address calculation unit (1, 2, 3, 12, 4) includes an adder (4) having inputs to which, respectively, the index, the increment, and the 2's complement of the comparison number are applied and addition is carried out in the adder, in the second flow, to determine satisfaction or non-satisfaction of the branching condition.

4. A system as claimed in claim 2, wherein the address calculation unit (1, 2, 3, 12, 4) includes an adder (4) having inputs to which, respectively, the index and the increment are applied and addition is carried out, in the second flow, to determine the sum of the index and the increment, and wherein subtraction is carried out in the adder (4), in the subsequent flow, between said sum and the comparison number.

5. A system as claimed in any preceding claim, wherein the address calculation unit (1, 2, 3, 12, 4) is in the stage (P2) after the first stage (P1) of the instruction pipeline.

## Revendications

1. Système de commande de branchement, dans une unité de traitement de données pipeline pouvant être mise en fonctionnement pour traiter des instructions en les développant en un ou plusieurs déroulements dans un pipeline d'instruction comportant un ensemble d'étages (P1 à P6) mis en fonctionnement pendant des cycles successifs et incluant un étage (P2) dans lequel une unité de calcul d'adresse (1,2,3,12,4) est mise en fonctionnement et comportant un pipeline de prise en charge d'instruction comportant un ensemble d'étages (I1,I2, I3,P1) mis en fonctionnement pendant des cycles successifs pour prendre en charge une instruction à une adresse qui lui est fournie,

   le système de commande pouvant être mis en fonctionnement en réponse à une instruction de branchement (BXH,BXLE) pour provoquer un branchement à une adresse de branchement quand une condition de branchement est satisfaite,

   et caractérisé en ce que:

   au cours d'un premier déroulement de l'instruction de branchement (BXH, BXLE), l'adresse de branchement est calculée par l'unité de calcul d'adresse (1,2,3,12,4), et

   au cours d'un deuxième déroulement, ou d'un deuxième déroulement et des déroulements suivants, l'état satisfaisant ou non satisfaisant de la condition de branchement est déterminé par la mise en oeuvre de ladite unité de calcul d'adresse (1,2,3,12,4),

   la prise en charge d'une instruction à l'adresse de branchement étant effectuée par fonctionnement du pipeline de prise en charge d'instruction (I1,I2,I3,P1) déclenché lors du calcul de l'adresse de branchement au cours dudit premier déroulement et se terminant lors de la détermination de l'état satisfaisant ou non satisfaisant de la condition de branchement ou pendant un cycle après cellle-ci.

2. Système selon la revendication 1, dans lequel l'état satisfaisant ou non satisfaisant de la condition de branchement est déterminé à partir du résultat d'une comparaison dans laquelle la somme d'un index et d'un incrément, qui sont les contenus de registres à usage général respectifs (R1,R3) dans l'unité de traitement de données désignés par l'instruction de branchement (BXH,BXLE), est comparée à un numéro de comparaison maintenu également dans un registre à usage général (R3+1>R3) de l'unité de traitement de données.

3. Système selon la revendication 2, dans lequel l'unité de calcul d'adresse (1,2,3,12,4) comprend un additionneur (4) comportant des entrées auxquelles sont appliqués respectivement l'index, l'incrément, et le complément à 2 du numéro de comparaison et une addition est exécutée dans l'additionneur, au cours du deuxième déroulement, pour déterminer l'état satisfaisant ou non satisfaisant de la condition de branchement.

4. Système selon la revendication 2, dans lequel l'unité de calcul d'adresse (1,2,3,12,4) comprend un additionneur (4) comportant des entrées auxquelles sont respectivement appliqués l'index et l'incrément et une addition est exécutée, au cours du deuxième déroulement, pour déterminer la somme de l'index et de l'incrément, et dans lequel une soustraction est exécutée dans l'additionneur (4), au cours du déroulement suivant, entre ladite somme et le numéro de comparaison.

5. Système selon l'une quelconque des revendications 1 à 4, dans lequel l'unité de calcul d'adresse (1,2,3,12,4) se trouve dans l'étage (P2) à la suite du premier étage (P1) du pipeline d'instruction.

**Patentansprüche**

1. Verzweigungsregelsystem, in einer Pipeline-Datenverarbeitungseinheit, die betreibbar ist, um Instruktionen durch Entwicklung derselben in einen oder mehrere Flüsse durch eine Instruktions-Pipeline mit einer Vielzahl von Stufen (P1 bis P6) zu verarbeiten, die in sukzessiven Zyklen betrieben werden und eine Stufe (P2) enthalten, in der eine Adreßberechnungseinheit (1, 2, 3, 12, 4) betätigt wird, und eine Instruktionsabruf-Pipeline mit einer Vielzahl von Stufen (I1, I2, I3, P1) hat, die in sukzessiven Zyklen betätigt werden, um eine Instruktion bei einer ihnen zugeführten Adresse abzurufen, welches Regelsystem betreibbar ist, ansprechend auf eine Verzweigungsanweisung (BXH, BXLE), um eine Verzweigung zu einer Verzweigungsadresse zu verursachen, wenn eine Verzweigungsbedingung erfüllt ist, und dadurch gekennzeichnet, daß:-

in einem ersten Fluß der Verzweigungsinstruktion (BXH, BXLE) die Verzweigungsadresse durch die Adreßberechnungseinheit (1, 2, 3, 12, 4) berechnet wird, und in einem zweiten Fluß, oder zweiten und darauf folgenden Flüssen, die Befriedigung oder die nicht-Befriedigung der Verzweigungsbedingung bestimmt wird, unter Verwendung der genannten Adreßberechnungseinheit (1, 2, 3, 12, 4), das Abrufen einer Instruktion bei der Verzweigungsadresse durchgeführt wird durch Betrieb der Instruktionsabruf-Pipeline (I1, I2, I3, P1), initiiert nach Berechnung der Verzweigungsadresse in dem genannten ersten Fluß und komplett nach Beendigung der Befriedigung oder nicht-Befriedigung der Verzweigungsbedingung oder innerhalb eines Zyklus danach.

2. System nach Anspruch 1, bei dem die Befriedigung oder nicht-Befriedigung der Verzweigungsbedingung bestimmt wird aus dem Ergebnis eines Vergleichs, bei welchem die Summe von einem Index und einem Inkrement, welche der Inhalt der jeweiligen Mehrzweckregister (R1, R3) in der Datenverarbeitungseinheit sind, die durch die Verzweigungsanweisung (BXH, BXLE) designiert ist, mit einer Vergleichszahl verglichen wird, die ebenfalls in dem Mehrzweckregister (R3 + 1, R3) der Datenverarbeitungseinheit gehalten wird.

3. System nach Anspruch 2, bei dem die Adreßberechnungseinheit (1, 2, 3, 12, 4) einen Addierer (4) enthält, der Eingänge hat, denen der Index, das Inkrement bzw. das 2-te Komplement der Vergleichszahl zugeführt wird, und die Addition in dem Addierer durchgeführt wird, in dem zweiten Fluß, um die Befriedigung oder die nicht-Befriedigung der Verzweigungsbedingung zu bestimmen.

4. System nach Anspruch 2, bei dem die Adreßberechnungseinheit (1, 2, 3, 12, 4) einen Addierer (4) enthält, der Eingänge hat, denen der Index bzw. das Inkrement zugeführt wird, und die Addition in dem zweiten Fluß durchgeführt wird, um die Summe des Index und des Inkrements zu bestimmen, und in dem Addierer (4) die Subtraktion zwischen der genannten Summe und der Vergleichszahl, in dem folgenden Fluß, durchgeführt wird.

5. System nach einem der vorhergehenden Ansprüche, bei dem die Adressenberechnungseinheit (1, 2, 3, 12, 4) eine Stufe (P2) nach der ersten Stufe (P1) der Instruktions-Pipeline ist.

| OP | R1 | R3 | 52 | D2 |
|----|----|----|----|----|

# Fig . I

Fig. 2

Instruction in Branched Address

Fig. 3

1st Flow BXH (BXLE)

2nd Flow

3rd Flow

Determination of Branching

Non-successful Branching Side

Flow (#1)

Flow (#2)

Instruction in Branched Address

EP 0 162 929 B1

# Fig. 4

**1st Flow**

P1 | P2 | P3 | P4 | P5 | P6

R(B2) → [BR] 1
[XR] 2
D2 → [DR] 3
→ 4 → [IAR] 11

**2nd Flow**

P1 | P2 | P3 | P4 | P5 | P6

R(R1) → [BR] 1
R(R3) → [XR] 2
R(R3+1, R3) → [DR] 3
→ 4

R(R1) → [1R] 7
R(R3) → [2R] 8
→ 9 → [RR] 10 → R(R1)

Determination of Branching

**Non-successful Branching Side**

(#1) Flow

P1 | P2 | P3 | P4 | P5 | P6

P1

Instruction in Branched Address

I1 | I2 | I3 | P1

EP 0 162 929 B1

$n-4$ | P1 | P2 | P3 | P4 | P5 | P6 |

$n-3$ | P1 | P2 | P3 | P4 | P5 | P5 | P6 |

$n-2$ | P1 | P2 | P3 | P4 | P4 | P5 | P6 |

$n-1$ | P1 | P2 | P3 | P3 | P4 | P5 | P6 |

$n$  | P1 | P2 | P2 | P3 | P4 | P5 | P6 | ◄── 3cycles ──►

1st Flow

$n$  | P1 | P1 | P2 | P3 | P4 | P5 | P6 |

2nd Flow

Determination of
Branching

Instruction in Branched
Address

| I1 | I2 | I3 | P1 | P2 | P3 | P4 | P5 | P6 |

# Fig.5

EP 0 162 929 B1

EP 0 162 929 B1

I1  I2  I3  P1  P2  P3  P4  P5  P6

P2OP ~28  P3OP  P4OP  P5OP  P6OP

Cache Memory

IFC 34

IARI 11

IFKR 13

14

EAR 15

16

IWR 17

18  SEL  19

General Purpose Register

BR 1

XR 2

WAR 12

DR 3

4

P3OAR 5

Cache Memory 20

2

21

7  IN

8  ZN

9

RR 10

Arithmetic Circuit

General Purpose Register 22

P4OAR 6

P5OAR ~23

P6OAR 24

26

27

25 TIC

Branching Determination Circuit 33

WAR = XR
WAR > XR
WAR < XR

Fig.6

29  30  31  32